# FASCICULE DE BREVET EUROPEEN

(11) **EP 4 226 029 B1**
(45) Date de publication et mention de la délivrance du brevet: **27.11.2024**
(21) Numéro de dépôt: 21786225.9
(22) Date de dépôt: 01.10.2021
(51) Int. Cl.: F02C 7/047, B64D 15/04

(54) **ATTÉNUATEUR DE VITESSE SUPERSONIQUE D'UNE ENTRÉE D'AIR D'UN ENSEMBLE PROPULSIF D'AÉRONEF COMPRENANT UN DISPOSITIF DE DÉGIVRAGE ET PROCÉDÉ DE DÉGIVRAGE**
ÜBERSCHALLGESCHWINDIGKEITSDÄMPFER MIT ENTEISUNGSVORRICHTUNG FÜR EINEN LUFTEINLASS EINES FLUGZEUGTRIEBWERKS UND ZUGEHÖRIGES ENTEISUNGSVERFAHREN
SUPERSONIC SPEED ATTENUATOR COMPRISING A DE-ICING DEVICE FOR AN AIR INLET OF AN AIRCRAFT POWER PLANT, AND CORRESPONDING DE-ICING METHOD

(30) Priorité: 08.10.2020 FR 2010267
(43) Date de publication de la demande: 16.08.2023
(73) Titulaire: Safran Nacelles, 76700 Gonfreville-l'Orcher (FR)
(72) Inventeur: JORET, Jean-Philippe, 77550 MOISSY-CRAMAYEL (FR); LEMOINE, Damien, 77550 MOISSY-CRAMAYEL (FR); LAMPAERT, Charles-Antoine, 77550 MOISSY-CRAMAYEL (FR); KIOUA, Hazem, 77550 MOISSY-CRAMAYEL (FR)
(74) Mandataire: Argyma
(86) Numéro de dépôt international: PCT/EP2021/077201
(87) Numéro de publication internationale: WO 2022/073892

(56) Documents cités:
- CH-A- 330 268
- RU-C1- 2 659 426
- US-A- 2 820 601

## Description

### Domaine technique

La présente invention concerne le domaine du dégivrage d'un atténuateur de vitesse supersonique d'une entrée d'air d'un ensemble propulsif d'aéronef.

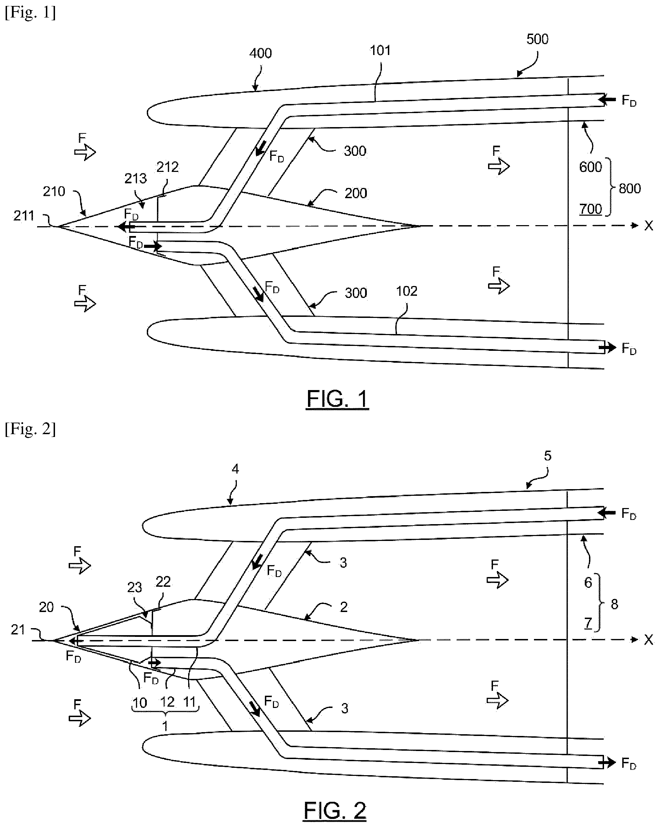

De manière connue, en référence à la [Fig.1], un ensemble propulsif d'aéronef supersonique 800 s'étend longitudinalement selon un axe X orienté d'amont en aval et comprend une turbomachine 700 et une nacelle 600 d'axe longitudinal X. La turbomachine 700 est configurée pour permettre la propulsion de l'aéronef à des vitesses supersoniques à partir de l'accélération d'un flux d'air F subsonique circulant d'amont en aval dans la turbomachine 700. La turbomachine 700 comprend classiquement les éléments suivants, non représentés et cités d'amont en aval : une soufflante, un (ou plusieurs) compresseur(s), une chambre de combustion et une (ou plusieurs) turbine(s). La nacelle 600 s'étend quant à elle extérieurement autour de la turbomachine 700 et comprend à son extrémité amont une entrée d'air 500. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

De manière connue, comme illustré sur la [Fig.1], l'entrée d'air 500 comprend une canalisation 400 d'axe longitudinal X configurée pour guider le flux d'air F dans la turbomachine 700. L'entrée d'air 500 comprend également un atténuateur de vitesse supersonique 200 s'étendant fixe à l'intérieur de la canalisation 400 selon l'axe longitudinal X ainsi que des bras de support 300 reliant l'atténuateur de vitesse supersonique 200 à la canalisation 400 et s'étendant radialement par rapport à l'axe longitudinal X. L'atténuateur de vitesse supersonique 200 comprend à l'amont une paroi externe conique 210 avec une extrémité effilée 211 s'étendant en saillie de la canalisation 400 de manière à générer une onde de choc réduisant la vitesse supersonique du flux d'air F entrant dans la canalisation 400 en une vitesse subsonique.

En pratique, du givre est susceptible de se former et de s'accumuler sur la paroi externe conique 210 de l'atténuateur de vitesse supersonique 200, ce qui perturbe l'admission du flux d'air F dans la canalisation 400. Comme illustré sur la [Fig.1], pour l'éviter, il est connu d'ajouter une cloison interne 212 dans l'atténuateur de vitesse supersonique 200, de manière à délimiter avec la paroi externe conique 210 une cavité 213 dans laquelle circule un flux d'air de dégivrage F_{D} pour réchauffer la paroi externe conique 210 par échanges thermiques. Le flux d'air de dégivrage F_{D} est classiquement prélevé et refoulé dans la turbomachine 700, notamment dans le compresseur, via une conduite d'alimentation 101 et une conduite de refoulement 102. Comme illustré sur la [Fig.1], la conduite d'alimentation 101 et la conduite de refoulement 102 débouchent au niveau de la cloison interne 212 en passant par les bras de support 300 et la canalisation 400, de manière à relier fluidiquement la turbomachine 700 et la cavité 213.

Dans les faits, un tel dégivrage est peu efficace car la cavité 213 comporte un volume important à chauffer, avec notamment une longueur axiale supérieure à 15cm. Une solution immédiate pour améliorer le dégivrage serait d'augmenter le flux d'air de dégivrage F_{D} délivré, toutefois cela entraînerait une perte de performance de la turbomachine 700. Une autre solution immédiate serait de délivrer un flux d'air de dégivrage F_{D} plus chaud dans la cavité 213. Cela nécessiterait toutefois de chauffer le flux d'air de dégivrage F_{D} ou de le prélever dans une zone plus chaude de la turbomachine 700, entraînant dans les deux cas une perte de performance de la turbomachine 700. Les autres documents RU2659426C1 et CH330268A présentent des dispositifs de dégivrage de l'état de la technique.

L'invention vise ainsi à dégivrer de manière efficace un atténuateur de vitesse supersonique d'une entrée d'air d'ensemble propulsif d'aéronef, sans réduire le rendement de la turbomachine.

### PRESENTATION DE L'INVENTION

L'invention concerne un atténuateur de vitesse supersonique d'une entrée d'air d'un ensemble propulsif d'aéronef, ledit ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ladite entrée d'air comprenant une canalisation d'axe longitudinal configurée pour guider le flux d'air dans la turbomachine, ledit atténuateur de vitesse supersonique étant configuré pour s'étendre fixe à l'intérieur de la canalisation selon l'axe longitudinal, ladite entrée d'air comprenant au moins un bras de support reliant l'atténuateur de vitesse supersonique à la canalisation, ledit atténuateur de vitesse supersonique comprenant :
- à l'amont, une paroi externe conique avec une extrémité effilée, et
- une cloison interne délimitant avec la paroi externe conique une cavité.

L'invention est remarquable en ce que l'atténuateur de vitesse supersonique comprend un dispositif de dégivrage comprenant :
- une paroi interne montée dans la cavité en vis-à-vis de la paroi externe conique de manière à délimiter ensemble un volume de dégivrage calibré,
- au moins un organe d'alimentation en flux d'air de dégivrage débouchant dans le volume de dégivrage, et
- au moins un organe de refoulement du flux d'air de dégivrage du volume de dégivrage.

Le dispositif de dégivrage de l'invention permet avantageusement d'empêcher toute apparition de givre sur la portion extérieure conique d'un atténuateur de vitesse supersonique d'ensemble propulsif d'aéronef, sans impact pour le rendement de la turbomachine. En effet, l'ajout d'une paroi interne dans la cavité permet de restreindre la circulation du flux d'air de dégivrage à proximité de la paroi externe conique, à savoir la zone à dégivrer, dans un volume de dégivrage calibré. Les échanges thermiques s'effectuent ainsi uniquement dans le volume de dégivrage et non dans toute la cavité, ce qui améliore l'efficacité du dégivrage. En outre, une telle solution ne nécessite pas de modifier le débit ou la température du flux d'air de dégivrage, contrairement aux solutions de l'art antérieur, ce qui évite toute dépense énergétique supplémentaire et donc une perte de performance de la turbomachine.

De préférence, l'extrémité effilée de la paroi externe conique de l'atténuateur de vitesse supersonique est configurée pour générer une onde de choc réduisant la vitesse supersonique du flux d'air entrant dans la canalisation en une vitesse subsonique.

De préférence, l'organe d'alimentation se présente sous la forme d'une conduite d'alimentation. De préférence également, l'organe de refoulement se présente sous la forme d'une conduite de refoulement.

Selon un aspect de l'invention, la paroi interne du dispositif de dégivrage comprend au moins une portion tronconique d'axe longitudinal et de section croissante d'amont en aval, de préférence une unique portion tronconique s'étendant sur au moins 50% de la longueur longitudinale de la paroi interne. Préférentiellement, la portion tronconique s'étend sur au moins 75% de la longueur longitudinale de la paroi interne. Autrement dit, le volume de dégivrage comprend une forme sensiblement conique. De manière avantageuse, la paroi interne comprend une forme proche de la paroi extérieure conique grâce à sa portion tronconique, ce qui permet de générer un volume de dégivrage réduit et de concentrer les échanges thermiques au niveau de la paroi extérieure conique.

Selon un aspect de l'invention, la portion tronconique de la paroi interne comporte un angle d'ouverture supérieur ou égal à l'angle d'ouverture de la paroi externe conique, de préférence strictement supérieur à l'angle d'ouverture de la paroi externe conique. Autrement dit, le volume de dégivrage comporte une épaisseur radiale, définie comme l'espace radial séparant la paroi interne de la paroi externe conique, qui est non constante mais diminue d'amont en aval au fur et à mesure que la paroi externe conique s'élargit. Une telle réduction d'amont en aval de l'épaisseur du volume de dégivrage, associée à une augmentation de la section transversale de la paroi externe conique, permet de limiter l'augmentation de la surface transversale du volume de dégivrage. Ceci permet de garantir une vitesse suffisante du flux d'air de dégivrage dans le volume de dégivrage et donc l'efficacité des échanges thermiques.

Selon un aspect de l'invention, le volume de dégivrage comporte une surface transversale sensiblement constante sur au moins 50% de sa longueur, de préférence sur au moins 75% de sa longueur. On précise que le terme « sensiblement » signifie ici qu'une faible variation inférieure à 20% de la surface transversale est admise. Une telle surface transversale constante permet avantageusement de conserver la vitesse du flux d'air de dégivrage et donc de garantir de bons échanges thermiques. De préférence, une telle surface transversale constante est égale à la surface transversale de la conduite d'alimentation et/ou de la conduite de refoulement. Le flux d'air de dégivrage conserve ainsi sa vitesse une fois acheminée dans le volume de dégivrage, contrairement à l'art antérieur où sa vitesse était bien plus faible dans la cavité.

Selon un aspect de l'invention, le volume de dégivrage comporte une épaisseur radiale inférieure à 50mm, préférentiellement inférieure à 30mm, et de préférence supérieure à 2mm. Une faible épaisseur radiale permet de concentrer le flux d'air de dégivrage au niveau de la paroi externe conique.

Selon un aspect de l'invention, la paroi interne du dispositif de dégivrage comprend à son extrémité amont une ouverture de mise en communication fluidique de l'organe d'alimentation et du volume de dégivrage. Le flux d'air de dégivrage refroidissant au fur et à mesure qu'il réchauffe la paroi externe conique ce qui réduit les échanges thermiques, une alimentation à l'amont dans la zone la plus exposée au givre permet astucieusement un dégivrage efficace.

De préférence, la conduite d'alimentation s'étend intérieurement à la paroi interne, préférentiellement selon l'axe longitudinal X, de manière à permettre l'acheminement du flux d'air de dégivrage à l'amont.

Selon un aspect de l'invention, la cloison interne comprend au moins une ouverture de mise en communication fluidique de l'organe de refoulement et du volume de dégivrage. Le flux d'air de dégivrage circule ainsi d'amont en aval dans tout le volume de dégivrage pour un dégivrage complet et efficace.

De préférence, le volume de dégivrage s'étend longitudinalement de l'extrémité effilée jusqu'à la cloison interne, de manière à dégivrer la paroi externe conique de manière globale.

Selon un aspect de l'invention, la cavité comprend une longueur axiale supérieure à 15cm. Le dispositif de dégivrage est particulièrement adapté pour des atténuateurs de vitesse supersoniques de cavité longue où le volume de dégivrage généré permet de limiter fortement le volume dans lequel circule le flux d'air de dégivrage, et donc de concentrer les échanges thermiques.

L'invention concerne également une entrée d'air d'ensemble propulsif d'aéronef, ledit ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ladite entrée d'air comprenant :
- une canalisation d'axe longitudinal configurée pour guider le flux d'air dans la turbomachine,
- un atténuateur de vitesse supersonique tel que décrit précédemment, s'étendant fixe à l'intérieur de la canalisation selon l'axe longitudinal, et
- au moins un bras de support reliant l'atténuateur de vitesse supersonique à la canalisation.

L'invention concerne en outre un ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ledit ensemble propulsif d'aéronef comprenant une entrée d'air telle que décrite précédemment.

L'invention concerne par ailleurs un procédé de dégivrage d'un atténuateur de vitesse supersonique tel que décrit précédemment, ledit procédé comprenant :
- une étape d'alimentation du volume de dégivrage en flux d'air de dégivrage par l'organe d'alimentation,
- une étape de circulation du flux d'air de dégivrage dans le volume de dégivrage, de manière à réchauffer la paroi externe par échanges thermiques, afin de la dégivrer, et
- une étape de refoulement du flux d'air de dégivrage dans l'organe de refoulement hors du volume de dégivrage.

De manière avantageuse, l'étape de circulation est mise en oeuvre dans le volume de dégivrage et non dans toute la cavité ce qui permet d'augmenter la vitesse du flux d'air de dégivrage et de concentrer les échanges thermiques au niveau de la paroi externe conique à dégivrer, pour plus d'efficacité. Un tel procédé est avantageusement simple, rapide et ne nécessite pas de dépense énergétique supplémentaire.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation en coupe longitudinale d'une entrée d'air d'ensemble propulsif d'aéronef comprenant un atténuateur de vitesse supersonique selon l'art antérieur ;
[Fig.2] La [Fig.2] est une représentation en coupe longitudinale d'une entrée d'air d'ensemble propulsif d'aéronef comprenant un atténuateur de vitesse supersonique selon une forme de réalisation de l'invention ;
[Fig.3] La [Fig.3] est une représentation en coupe longitudinale de la portion amont de l'atténuateur de vitesse supersonique de la [Fig.2] ;
[Fig.4] La [Fig.4] et
[Fig.5] La [Fig.5] sont des représentations selon deux coupes transversales de la portion amont de l'atténuateur de vitesse supersonique de la [Fig.3] ;
[Fig.6] La [Fig.6] et
[Fig.7] La [Fig.7] sont des représentations en coupe longitudinale d'une entrée d'air d'ensemble propulsif d'aéronef comprenant un atténuateur de vitesse supersonique selon deux formes de réalisation alternatives de l'invention ;
[Fig.8] La [Fig.8] et
[Fig.9] La [Fig.9] sont deux représentations en coupe longitudinale de la portion amont de l'atténuateur de vitesse supersonique selon deux formes de réalisation alternatives de l'invention ; et
[Fig.10] La [Fig.10] est une représentation schématique des étapes du procédé de dégivrage d'un atténuateur de vitesse supersonique selon un mode de réalisation de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la [Fig.2] et comme décrit dans le préambule, un ensemble propulsif d'aéronef supersonique 8 s'étend longitudinalement selon un axe X orienté d'amont en aval et comprend une turbomachine 7 et une nacelle 6 d'axe longitudinal X. La turbomachine 7 est configurée pour permettre la propulsion de l'aéronef à des vitesses supersoniques à partir de l'accélération d'un flux d'air F subsonique circulant d'amont en aval dans la turbomachine 7. La turbomachine 7 comprend classiquement les éléments suivants, non représentés et cités d'amont en aval : une soufflante, un (ou plusieurs) compresseur(s), une chambre de combustion et une (ou plusieurs) turbine(s). La nacelle 6 s'étend quant à elle extérieurement autour de la turbomachine 7 et comprend à son extrémité amont une entrée d'air 5. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.2] et décrit dans le préambule, l'entrée d'air 5 comprend une canalisation 4 d'axe longitudinal X configurée pour guider le flux d'air F dans la turbomachine 7. De manière connue, la canalisation 4 est sensiblement cylindrique et comporte une paroi intérieure pour guider le flux d'air F jusqu'à la turbomachine 7.

L'entrée d'air 5 comprend également un atténuateur de vitesse supersonique 2 s'étendant fixe à l'intérieur de la canalisation 4 selon l'axe longitudinal X ainsi que des bras de support 3 reliant l'atténuateur de vitesse supersonique 2 à la canalisation 4 et s'étendant radialement par rapport à l'axe longitudinal X.

En référence à la [Fig.2] et comme décrit dans le préambule, l'atténuateur de vitesse supersonique 2 comprend une portion amont qui comporte une paroi externe conique 20 ainsi qu'une cloison interne 22 délimitant ensemble une cavité 23. La paroi externe conique 20 comprend une extrémité effilée 21 à l'amont de manière à générer une onde de choc réduisant la vitesse supersonique du flux d'air F entrant dans la canalisation 4 en une vitesse subsonique. On précise que, dans cet exemple, l'extrémité effilée 21 s'étend en saillie vers l'amont par rapport à la canalisation 4 pour favoriser la génération de l'onde de choc, mais qu'elle pourrait alternativement être alignée à l'extrémité amont de l'entrée d'air 4 ou être située plus en aval. En pratique, du givre est susceptible de se former et de s'accumuler sur la paroi externe conique 20 de l'atténuateur de vitesse supersonique 2, ce qui perturbe l'admission du flux d'air F dans la canalisation 4. Dans cet exemple, l'atténuateur de vitesse supersonique 2 comporte une portion aval qui comporte une paroi externe conique qui est effilée vers l'aval. Autrement dit, l'atténuateur de vitesse supersonique 2 comporte une portion amont de section croissante d'amont vers l'aval puis une portion aval de section décroissante d'amont vers l'aval comme illustré à la [Fig.2].

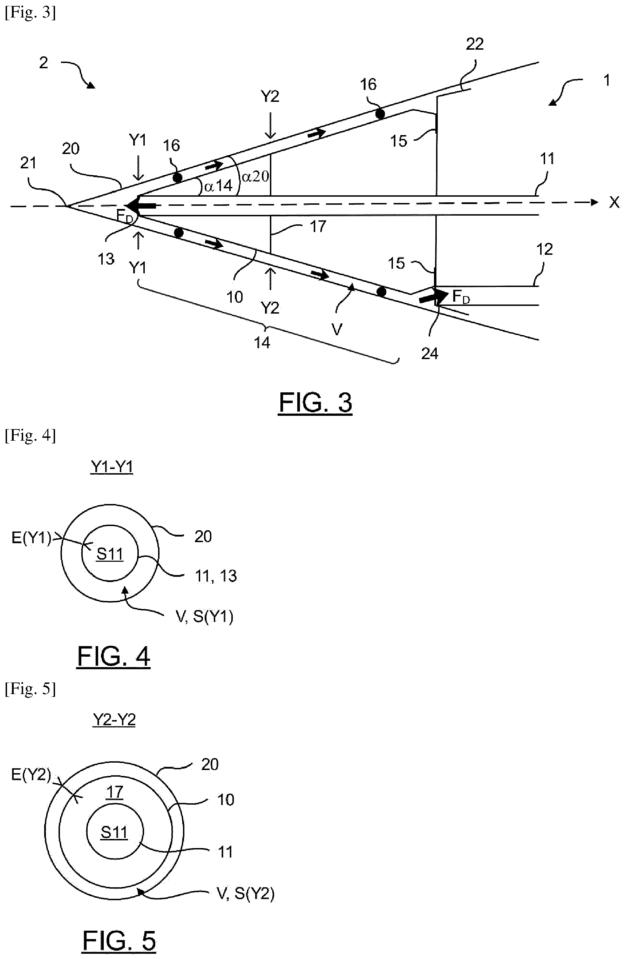

Selon l'invention et toujours en référence aux figures 2 et 3, pour éliminer le givre et prévenir son apparition, l'atténuateur de vitesse supersonique 2 comprend en outre un dispositif de dégivrage 1 comprenant :
- une paroi interne 10 montée dans la cavité 23 en vis-à-vis de la paroi externe conique 20 de manière à délimiter ensemble un volume de dégivrage V calibré ([Fig.3]),
- une (ou plusieurs) conduite(s) d'alimentation 11 en flux d'air de dégivrage F_{D} débouchant dans le volume de dégivrage V, et
- une (ou plusieurs) conduite(s) de refoulement 12 du flux d'air de dégivrage F_{D} du volume de dégivrage V.

Dans l'exemple des figures 2 et 3, une unique conduite d'alimentation 11 et une unique conduite de refoulement 12 sont représentées. La conduite d'alimentation 11 est configurée pour prélever le flux d'air de dégivrage F_{D} dans le flux d'air F au niveau du compresseur de la turbomachine d'aéronef 7. Comme illustré sur la [Fig.2], la conduite d'alimentation 11 s'étend à l'intérieur de la canalisation 4 et d'un bras de support 3 afin de rejoindre l'atténuateur de vitesse supersonique 2. Comme illustré sur la [Fig.3], au sein de l'atténuateur de vitesse supersonique 2, la conduite d'alimentation 11 traverse la cloison interne 22 et s'étend intérieurement à la paroi interne 10, de manière à déboucher dans le volume de dégivrage V au niveau d'une ouverture 13 de la paroi interne 10 située à l'amont.

Comme illustré sur la [Fig.3], la conduite de refoulement 12 est configurée pour prélever le flux d'air de dégivrage F_{D} du volume de dégivrage V dans une ouverture 24 formée à l'aval dans la cloison interne 22. Comme illustré sur la [Fig.2], la conduite de refoulement 12 s'étend à l'intérieur d'un bras de support 3 et de la canalisation 4 de manière à déboucher dans le flux d'air F au niveau du compresseur de la turbomachine d'aéronef. De préférence, la conduite d'alimentation 11 et la conduite de refoulement 12 s'étendent dans des bras de support 3 différents. L'entrée d'air 5 comprenant classiquement au moins trois bras de support 3, la conduite de refoulement 12 s'étend dans l'un des bras de support 3 et une ou deux conduites d'alimentation 11 s'étendent chacune dans un autre bras de support 3. Toujours de préférence, les conduites d'alimentation 11 provenant des deux bras de support 3 fusionnent en aval de la cloison interne 22 pour former une unique conduite d'alimentation 11.

Il va de soi que l'alimentation et le refoulement du flux d'air de dégivrage F_{D} pourraient être mis en oeuvre différemment et avec un organe d'alimentation 11 et un organe de refoulement 12 quelconques. A titre d'exemple, l'organe de refoulement 12 pourrait se présenter sous la forme d'une ouverture formée dans la paroi externe conique 20.

En référence à la [Fig.3], la paroi interne 10 du dispositif de dégivrage 1 comprend d'amont en aval une ouverture 13 de mise en communication fluidique de la conduite d'alimentation 11 et du volume de dégivrage V, une paroi tronconique 14 et une portion de fixation 15 sur la cloison interne 22, afin de maintenir la paroi interne 10. De préférence, la portion de fixation 15 et la cloison interne 22 sont soudées ou assemblées par des éléments de fixation, tels que des vis. Dans l'exemple de la [Fig.3], la paroi interne 10 comprend en outre des éléments d'appui 16 logés dans le volume de dégivrage V en contact avec la paroi externe conique 20 et la paroi interne 10, de manière à maintenir en position la paroi interne 10 en complément de la portion de fixation 15. Toujours dans l'exemple de la [Fig.3], la paroi interne 10 comprend par ailleurs un cadre de maintien 17 reliant la conduite d'alimentation 11 à la paroi interne 10 et s'étendant transversalement par rapport à l'axe longitudinal X, de manière à maintenir fixe la conduite d'alimentation 11. Il va de soi que la paroi interne 10 pourrait comprendre un nombre d'éléments d'appui 16 et de cadres de maintien 17 quelconque. La paroi interne 10 pourrait également être exempte d'éléments d'appui 16 et/ou de cadre de maintien 17. De préférence, la paroi interne 10 comprend du titane.

Dans l'exemple de la [Fig.3], la portion tronconique 14 comporte une section circulaire croissante d'amont en aval, de même que la paroi externe conique 20. La paroi tronconique 14 s'étend en outre sur plus de 75% de la longueur longitudinale de la paroi interne 10 de sorte que le volume de dégivrage V formé présente une forme sensiblement conique.

Une telle forme permet au volume de dégivrage V de comporter des dimensions restreintes tout en s'étendant longitudinalement de l'extrémité effilée 21 jusqu'à la cloison interne 22. Il en résulte que la paroi externe conique 20 est réchauffée de manière efficace et globale en concentrant les échanges thermiques dans le volume de dégivrage V plutôt que dans toute la cavité 23. Il va de soi que la portion tronconique 14 pourrait être réduite et/ou que la paroi interne 10 pourrait comporter plusieurs portions tronconiques 14 successives, toutefois l'efficacité des échanges thermiques en serait amoindrie. De préférence, la paroi interne 10 comporte une unique portion tronconique 14 s'étendant sur au moins 50% de la longueur longitudinale de la paroi interne 10.

Toujours dans l'exemple de la [Fig.3], la portion tronconique 14 comporte un angle d'ouverture α14, défini par rapport à l'axe longitudinal X, qui est supérieur à l'angle d'ouverture α20 de la paroi externe conique 20. Autrement dit, la portion tronconique 14 comporte une section transversale qui s'élargit davantage d'amont en aval que la section transversale de la paroi externe conique 20. Il en résulte que l'épaisseur radiale du volume de dégivrage V, définie comme la distance séparant la paroi externe conique 20 de la paroi interne 10 dans un plan radial à l'axe longitudinal X, diminue d'amont en aval le long de la portion tronconique 14. Comme illustré sur les figures 3, 4 et 5, en considérant un plan transversal amont Y1-Y1 et un plan transversal aval Y2-Y2, l'épaisseur radiale E(Y1) ([Fig.4]) du volume de dégivrage V dans le plan transversal amont Y1-Y1 est supérieure à son épaisseur radiale E(Y2) ([Fig.5]) dans le plan transversal aval Y2-Y2.

De préférence, l'angle d'ouverture α14 de la portion tronconique 14 est choisi de manière à ce que la surface transversale du volume de dégivrage V, à savoir son aire dans un plan transversal Y1-Y1, Y2-Y2, soit sensiblement constante le long de la portion tronconique 14. On précise que le terme « sensiblement » signifie ici qu'une faible variation inférieure à 20% de la surface transversale est admise. Ainsi, comme illustré sur les figures 4 et 5, la surface transversale S(Y1) du volume de dégivrage V dans le plan transversal amont Y1-Y1 est égale à sa surface transversale S(Y2) dans le plan transversal aval Y2-Y2. La conservation de la surface transversale du volume de dégivrage V permet avantageusement de conserver la vitesse du flux d'air de dégivrage F_{D} et ainsi d'améliorer les échanges thermiques avec la paroi externe conique 20.

Comme illustré sur les figures 4 et 5, de préférence également, l'angle d'ouverture α14 de la portion tronconique 14 est choisi de manière à ce que la surface transversale S du volume de dégivrage V soit sensiblement égale à la section transversale S11 de la conduite d'alimentation 11. Le flux d'air de dégivrage F_{D} conserve ainsi sa vitesse d'acheminement au sein du volume de dégivrage V ce qui favorise les échanges thermiques et sa bonne circulation dans le volume de dégivrage V. De préférence également, la section transversale de la conduite de refoulement 12 est égale à la section transversale S11 de la conduite d'alimentation 11 de manière à favoriser la circulation du flux d'air de dégivrage F_{D} d'amont en aval dans le volume de dégivrage V. Selon un aspect préféré, l'épaisseur radiale E du volume de dégivrage V est inférieure à 50mm, de préférence inférieure à 30mm, et supérieure à 2mm.

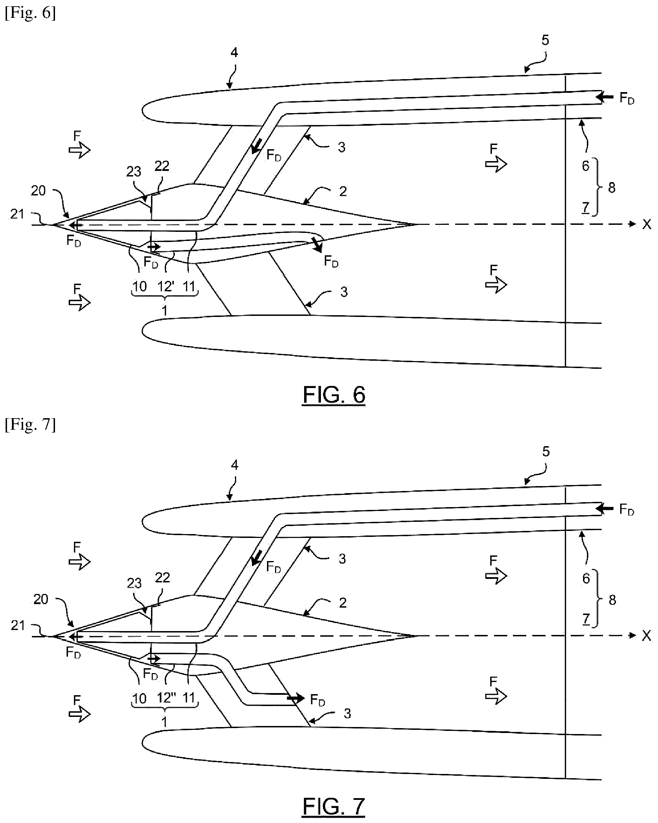

En référence aux figures 6 et 7 illustrant des alternatives de l'invention, la conduite de refoulement 12 peut déboucher ailleurs qu'au niveau du compresseur de la turbomachine 7. Dans l'exemple de la [Fig.6], la conduite de refoulement 12 s'étend uniquement dans l'atténuateur de vitesse supersonique 2 et débouche à l'aval. Dans l'exemple de la [Fig.7], la conduite de refoulement 12 s'étend uniquement dans l'atténuateur de vitesse supersonique 2 et un bras de support 3 et débouche à l'aval dudit bras de support 3. Dans ces deux exemples, le flux d'air de dégivrage F_{D} est ainsi refoulé dans le flux d'air F extérieur au niveau de l'entrée d'air 5 avant son admission dans la turbomachine d'aéronef 7. Il va de soi que la conduite de refoulement 12 pourrait déboucher ailleurs sans que cela ne modifie l'invention. De même, il va de soi que la conduite d'alimentation 11 pourrait prélever le flux d'air de dégivrage F_{D} ailleurs qu'au niveau du compresseur de la turbomachine 7 sans que cela ne modifie l' invention.

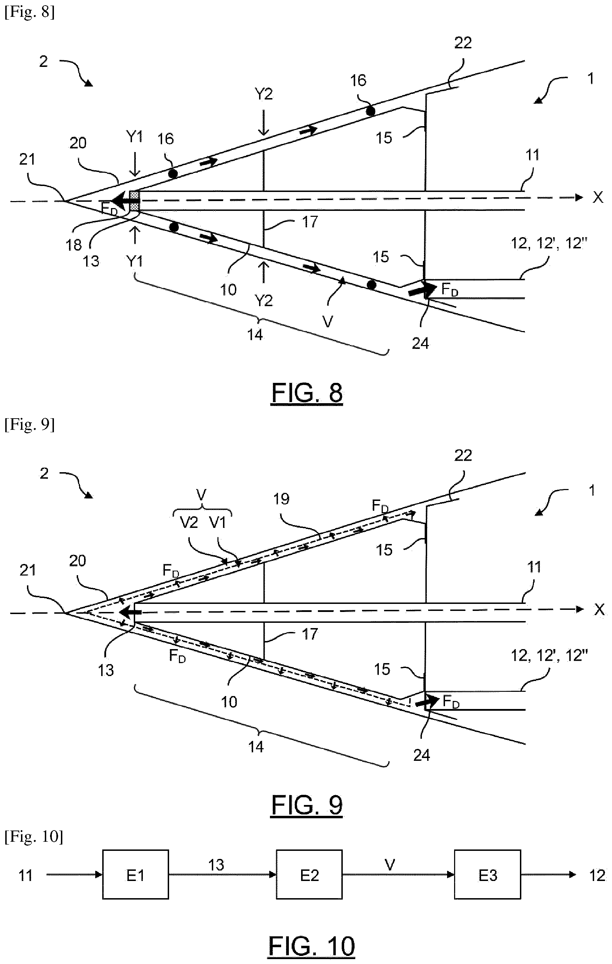

Dans l'exemple de la [Fig.8] illustrant une autre alternative de l'invention, l'ouverture 13 de la paroi interne 10 comprend une grille 18 afin d'accélérer le flux d'air de dégivrage F_{D} la traversant. Une grille 18 peut également être prévue pour l'ouverture 24 de la cloison interne 22 pour accélérer le flux d'air de dégivrage F_{D} en aval du volume de dégivrage V avant son refoulement. L'augmentation de la vitesse du flux d'air de dégivrage F_{D} favorise les échanges thermiques.

L'invention prévoit alternativement d'ajouter un organe de diffusion au niveau de l'ouverture 13 de la paroi interne 10 de manière à diffuser le flux d'air de dégivrage F_{D} au plus près de la paroi externe conique 20. A titre d'exemple, l'organe de diffusion se présente sous la forme d'un collecteur comprenant des perforations ou des tubes guidant le flux d'air de dégivrage F_{D} contre la paroi externe conique 20.

Dans l'exemple de la [Fig.9] illustrant une autre alternative de l'invention, le dispositif de dégivrage 1 comprend une paroi perforée 19 montée dans le volume de dégivrage V entre la paroi interne 10 et la paroi externe conique 20 de manière à guider le flux d'air de dégivrage F_{D} contre la paroi externe conique 20 et y favoriser les échanges thermiques. Plus précisément, la paroi perforée 19 délimite un premier sous-volume V1, du côté de la paroi interne 10 et dans lequel débouche la conduite d'alimentation 11, et un deuxième sous-volume V2, du côté de la paroi externe conique 20. Le premier sous-volume V1 et le deuxième sous-volume V2 forment ensemble le volume de dégivrage V. Le premier sous-volume V1 et le deuxième sous-volume V2 sont reliés fluidiquement via des perforations de la paroi perforée 19 qui permettent d'accélérer le flux d'air de dégivrage F_{D} lors de son admission dans le deuxième sous-volume V2. De préférence, la paroi perforée 19 s'étend sur au moins 50% de la longueur longitudinale de la paroi interne 10, préférentiellement sur au moins 75% de la longueur longitudinale de la paroi interne 10. De préférence également, la paroi perforée 19 comprend une forme conique.

L'invention concerne également un procédé de dégivrage de l'atténuateur de vitesse supersonique 2 au moyen du dispositif de dégivrage précédemment présenté. En référence à la [Fig.10], le procédé de dégivrage comprend tout d'abord une étape d'alimentation E1 du volume de dégivrage V en flux d'air de dégivrage F_{D}, suivie d'une étape de circulation E2 dans le volume de dégivrage V et enfin d'une étape de refoulement E3 du flux d'air de dégivrage F_{D} hors du volume de dégivrage V.

Comme illustré sur les figures 2 et 10, plus précisément, lors de l'étape d'alimentation E1, le flux d'air de dégivrage F_{D} est acheminé par la conduite d'alimentation 11 de son lieu de prélèvement, dans le flux d'air F au niveau du compresseur de la turbomachine 7 ou autre, jusqu'au volume de dégivrage V. Pour cela, le flux d'air de dégivrage F_{D} traverse la canalisation 4, un bras de support 3 et la cloison interne 22 jusqu'à l'ouverture 13 formée dans la paroi interne 10 à l'amont.

Comme illustré sur les figures 3 et 10, lors de l'étape de circulation E2, le flux d'air de dégivrage F_{D} circule d'amont en aval dans le volume de dégivrage V au contact de la paroi externe conique 20 de manière à la réchauffer par échanges thermiques, convectifs mais également conductifs, afin de la dégivrer. Les échanges thermiques les plus importants s'effectuent à l'amont lorsque la température du flux d'air de dégivrage F_{D} est la plus grande, ce qui correspond à la zone la plus soumise au givre. La vitesse du flux d'air de dégivrage F_{D} est sensiblement conservée constante pour favoriser les échanges thermiques tout le long du volume de dégivrage V.

Toujours en référence aux figures 3 et 10, lors de l'étape de refoulement E3, le flux d'air de dégivrage F_{D}, dont la température a diminué pour réchauffer la paroi externe conique 20, rejoint la conduite de refoulement 12 pour être rejeté dans le flux d'air F au niveau du compresseur ([Fig.2]) ou dans l'entrée d'air 5 (figures 6 et 7).

Pour résumer, l'invention permet de dégivrer et de prévenir l'apparition de givre sur la paroi externe conique 20 amont d'un atténuateur de vitesse supersonique 2 d'un ensemble propulsif d'aéronef 8. Le dégivrage est avantageusement efficace et peu énergivore car ciblé au contact de la paroi externe conique 20 et non dans toute la cavité 23 comme dans l'art antérieur. Pour cela, une paroi interne 10 est ajoutée dans la cavité 23 de manière à délimiter un volume de dégivrage V restreint, où la vitesse du flux d'air de dégivrage F_{D} est sensiblement maintenue constante pour des échanges thermiques efficaces. Un tel dégivrage est particulièrement avantageux lorsque la portion amont de l'atténuateur de vitesse supersonique 2 est longue.

## Revendications

1. Atténuateur de vitesse supersonique (2) d'une entrée d'air (5) d'un ensemble propulsif d'aéronef (8), ledit ensemble propulsif d'aéronef (8) s'étendant longitudinalement selon un axe (X) orienté d'amont en aval et comprenant une turbomachine (7) configuré pour permettre la propulsion de l'aéronef à des vitesses supersoniques à partir de l'accélération d'un flux d'air (F) subsonique circulant d'amont en aval dans la turbomachine (7), ladite entrée d'air (5) comprenant une canalisation (4) d'axe longitudinal (X) configurée pour guider le flux d'air (F) dans la turbomachine (7), ledit atténuateur de vitesse supersonique (2) étant configuré pour s'étendre fixe à l'intérieur de la canalisation (4) selon l'axe longitudinal (X), ladite entrée d'air (5) comprenant au moins un bras de support (3) reliant l'atténuateur de vitesse supersonique (2) à la canalisation (4), ledit atténuateur de vitesse supersonique (2) comprenant :
• à l'amont, une paroi externe conique (20) avec une extrémité effilée (21),
• une cloison interne (22) délimitant avec la paroi externe conique (20) une cavité (23),
• atténuateur de vitesse supersonique (2) **caractérisé par le fait qu'**il comprend un dispositif de dégivrage (1) comprenant :
• une paroi interne (10) montée dans la cavité (23) en vis-à-vis de la paroi externe conique (20) de manière à délimiter ensemble un volume de dégivrage (V) calibré,
• au moins un organe d'alimentation (11) en flux d'air de dégivrage (F_{D}) débouchant dans le volume de dégivrage (V), et
• au moins un organe de refoulement (12) du flux d'air de dégivrage (F_{D}) du volume de dégivrage (V).

2. Atténuateur de vitesse supersonique (2) selon la revendication 1, dans lequel la paroi interne (10) du dispositif de dégivrage (1) comprend au moins une portion tronconique (14) d'axe longitudinal (X) et de section croissante d'amont en aval, de préférence une unique portion tronconique (14) s'étendant sur au moins 50% de la longueur longitudinale de la paroi interne (10).

3. Atténuateur de vitesse supersonique (2) selon la revendication 2, dans lequel la portion tronconique (14) de la paroi interne (10) comporte un angle d'ouverture (α14) supérieur ou égal à l'angle d'ouverture (α20) de la paroi externe conique (20), de préférence strictement supérieur à l'angle d'ouverture (α20) de la paroi externe conique (20).

4. Atténuateur de vitesse supersonique (2) selon l'une des revendications 1 à 3, dans lequel le volume de dégivrage (V) comporte une surface transversale (S) sensiblement constante sur au moins 50% de sa longueur, de préférence sur au moins 75% de sa longueur.

5. Atténuateur de vitesse supersonique (2) selon l'une des revendications 1 à 4, dans lequel le volume de dégivrage (V) comporte une épaisseur radiale (E) inférieure à 50mm, et de préférence supérieure à 2mm.

6. Atténuateur de vitesse supersonique (2) selon l'une des revendications 1 à 5, dans lequel la paroi interne (10) du dispositif de dégivrage (1) comprend à son extrémité amont une ouverture (13) de mise en communication fluidique de l'organe d'alimentation (11) et du volume de dégivrage (V).

7. Atténuateur de vitesse supersonique (2) selon l'une des revendications 1 à 6, dans lequel la cloison interne (22) comprend au moins une ouverture (24) de mise en communication fluidique de l'organe de refoulement (12) et du volume de dégivrage (V).

8. Atténuateur de vitesse supersonique (2) selon l'une des revendications 1 à 7, dans lequel la cavité (23) comprend une longueur axiale supérieure à 15cm.

9. Entrée d'air (5) d'un ensemble propulsif d'aéronef (8), ledit ensemble propulsif d'aéronef (8) s'étendant longitudinalement selon un axe (X) orienté d'amont en aval et comprenant une turbomachine (7) configurée pour permettre la propulsion de l'aéronef à des vitesses supersoniques à partir de l'accélération d'un flux d'air (F) subsonique circulant d'amont en aval dans la turbomachine (7), ladite entrée d'air (5) comprenant :
• une canalisation (4) d'axe longitudinal (X) configurée pour guider le flux d'air (F) dans la turbomachine (7),
• un atténuateur de vitesse supersonique (2) selon l'une des revendications 1 à 8, s'étendant fixe à l'intérieur de la canalisation (4) selon l'axe longitudinal (X), et
• au moins un bras de support (3) reliant l'atténuateur de vitesse supersonique (2) à la canalisation (4).

10. Procédé de dégivrage d'un atténuateur de vitesse supersonique (2) selon l'une des revendications 1 à 8, ledit procédé comprenant :
• une étape d'alimentation (E1) du volume de dégivrage (V) en flux d'air de dégivrage (F_{D}) par l'organe d'alimentation (11),
• une étape de circulation (E2) du flux d'air de dégivrage (F_{D}) dans le volume de dégivrage (V), de manière à réchauffer la paroi externe (20) par échanges thermiques, afin de la dégivrer, et
• une étape de refoulement (E3) du flux d'air de dégivrage (F_{D}) dans l'organe de refoulement (12) hors du volume de dégivrage (V).

## Patentansprüche

1. Überschallgeschwindigkeitsdämpfer (2) eines Lufteinlasses (5) einer Luftfahrzeug-Antriebseinheit (8), wobei sich die Luftfahrzeug-Antriebseinheit (8) in Längsrichtung gemäß einer von stromaufwärts nach stromabwärts verlaufenden Achse (X) erstreckt und eine Turbomaschine (7) umfasst, die so konfiguriert ist, dass sie den Antrieb des Luftfahrzeugs in Überschallgeschwindigkeiten ausgehend von der Beschleunigung eines Unterschall-Luftstroms (F) ermöglicht, der in der Turbomaschine (7) von stromaufwärts nach stromabwärts zirkuliert, wobei der Lufteinlass (5) einen Kanal (4) mit einer Längsachse (X) umfasst, der so konfiguriert ist, dass er den Luftstrom (F) in der Turbomaschine (7) führt, wobei der Überschallgeschwindigkeitsdämpfer (2) so konfiguriert ist, dass er sich gemäß der Längsachse (X) fest im Inneren des Kanals (4) erstreckt, wobei der Lufteinlass (5) mindestens einen Stützarm (3) umfasst, der den Überschallgeschwindigkeitsdämpfer (2) mit dem Kanal (4) verbindet, wobei der Überschallgeschwindigkeitsdämpfer (2) umfasst:
• stromaufwärts eine konische Außenwand (20) mit einem sich verjüngenden Ende (21),
• eine innere Trennwand (22), die mit der konischen Außenwand (20) einen Hohlraum (23) begrenzt,
wobei der Überschallgeschwindigkeitsdämpfer (2), **dadurch gekennzeichnet ist, dass** er eine Enteisungsvorrichtung (1) umfasst, die umfasst:
• eine Innenwand (10), die in dem Hohlraum (23) gegenüber der konischen Außenwand (20) angebracht ist, um gemeinsam ein kalibriertes Enteisungsvolumen (V) zu begrenzen,
• mindestens ein Organ (11) zur Versorgung mit einem Enteisungsluftstroms (F_{D}), der in das Enteisungsvolumen (V) mündet, und
• mindestens ein Organ (12) zum Ausstoßen des Enteisungsluftstroms (F_{D}) aus dem Enteisungsvolumen (V).

2. Überschallgeschwindigkeitsdämpfer (2) nach Anspruch 1, wobei die Innenwand (10) der Enteisungsvorrichtung (1) mindestens einen kegelstumpfförmigen Abschnitt (14) mit einer Längsachse (X) und einem von stromaufwärts nach stromabwärts zunehmenden Querschnitt aufweist, vorzugsweise einen einzigen kegelstumpfförmigen Abschnitt (14), der sich über mindestens 50 % der Längslänge der Innenwand (10) erstreckt.

3. Überschallgeschwindigkeitsdämpfer (2) nach Anspruch 2, wobei der kegelstumpfförmige Abschnitt (14) der Innenwand (10) einen Öffnungswinkel (α14) aufweist, der größer oder gleich dem Öffnungswinkel (α20) der konischen Außenwand (20) ist, vorzugsweise strikt größer als der Öffnungswinkel (α20) der konischen Außenwand (20) ist.

4. Überschallgeschwindigkeitsdämpfer (2) nach einem der Ansprüche 1 bis 3, wobei das Enteisungsvolumen (V) eine transversale Fläche (S) aufweist, die über mindestens 50 % ihrer Länge, vorzugsweise über mindestens 75 % ihrer Länge, im Wesentlichen konstant ist.

5. Überschallgeschwindigkeitsdämpfer (2) nach einem der Ansprüche 1 bis 4, wobei das Enteisungsvolumen (V) eine radiale Dicke (E) von weniger als 50 mm und vorzugsweise mehr als 2 mm aufweist.

6. Überschallgeschwindigkeitsdämpfer (2) nach einem der Ansprüche 1 bis 5, wobei die Innenwand (10) der Enteisungsvorrichtung (1) an ihrem stromaufwärtigen Ende eine Öffnung (13) zur Herstellung einer Fluidverbindung zwischen dem Versorgungsorgan (11) und dem Enteisungsvolumen (V) aufweist.

7. Überschallgeschwindigkeitsdämpfer (2) nach einem der Ansprüche 1 bis 6, wobei die innere Trennwand (22) mindestens eine Öffnung (24) zur Herstellung einer Fluidverbindung zwischen dem Ausstoßorgan (12) und dem Enteisungsvolumen (V) aufweist.

8. Überschallgeschwindigkeitsdämpfer (2) nach einem der Ansprüche 1 bis 7, wobei der Hohlraum (23) eine axiale Länge von mehr als 15 cm umfasst.

9. Lufteinlass (5) einer Luftfahrzeug-Antriebseinheit (8), wobei sich die Luftfahrzeug-Antriebseinheit (8) in Längsrichtung entlang einer von stromaufwärts nach stromabwärts verlaufenden Achse (X) erstreckt und eine Turbomaschine (7) umfasst, die so konfiguriert ist, dass sie den Antrieb des Luftfahrzeugs in Überschallgeschwindigkeiten ausgehend von der Beschleunigung eines Unterschall-Luftstroms (F) ermöglicht, der in der Turbomaschine (7) von stromaufwärts nach stromabwärts zirkuliert, wobei der Lufteinlass (5) umfasst:
• einen Kanal (4) mit einer Längsachse (X), der so konfiguriert ist, dass er den Luftstrom (F) in der Turbomaschine (7) leitet,
• einen Überschallgeschwindigkeitsdämpfer (2) nach einem der Ansprüche 1 bis 8, der sich gemäß der Längsachse (X) fest im Inneren des Kanals (4) erstreckt, und
• mindestens einen Stützarm (3), der den Überschallgeschwindigkeitsdämpfer (2) mit dem Kanal (4) verbindet.

10. Verfahren zum Enteisen eines Überschallgeschwindigkeitsdämpfers (2) nach einem der Ansprüche 1 bis 8, wobei das Verfahren umfasst:
• einen Schritt des Versorgens (E1) des Enteisungsvolumens (V) mit einem Enteisungsluftstrom (F_{D}) durch das Versorgungsorgan (11),
• einen Schritt des Zirkulierens (E2) des Enteisungsluftstroms (F_{D}) in dem Enteisungsvolumen (V), um die Außenwand (20) durch Wärmeaustausch zu erwärmen, um sie zu enteisen, und
• einen Schritt des Ausstoßens (E3) des Enteisungsluftstroms (F_{D}) im Ausstoßorgan (12) aus dem Enteisungsvolumen (V).

## Claims

1. Supersonic speed attenuator (2) of an air intake (5) of an aircraft propulsion assembly (8), said aircraft propulsion assembly (8) extending longitudinally along an axis (X) oriented from upstream to downstream and comprising a turbomachine (7) configured to enable the propulsion of the aircraft at supersonic speeds from the acceleration of a subsonic air flow (F) circulating from upstream to downstream in the turbomachine (7), said air intake (5) comprising a duct (4) of longitudinal axis (X) configured to guide the air flow (F) into the turbomachine (7), said supersonic speed attenuator (2) being configured to extend fixed inside the duct (4) along the longitudinal axis (X), said air intake (5) comprising at least one support arm (3) connecting the supersonic speed attenuator (2) to the duct (4), said supersonic speed attenuator (2) comprising:
- upstream, a conical outer wall (20) with a tapered end (21),
- an inner partition (22) delimiting a cavity (23) with the conical outer wall (20),
- supersonic speed attenuator (2) **characterized by the fact** that it comprises a de-icing device (1) comprising:
- an inner wall (10) mounted in the cavity (23) opposite the conical outer wall (20) so as to delimit together a calibrated de-icing volume (V),
- at least one member for supplying (11) with de-icing air flow (F_{D}) emerging into the de-icing volume (V), and
- at least one member for discharging (12) the de-icing air flow (F_{D}) from the de-icing volume (V).

2. Supersonic speed attenuator (2) according to claim 1, wherein the inner wall (10) of the de-icing device (1) comprises at least one frustoconical portion (14) of longitudinal axis (X) and an increasing cross-section from upstream to downstream, preferably a single frustoconical portion (14) extending over at least 50% of the longitudinal length of the inner wall (10).

3. Supersonic speed attenuator (2) according to claim 2, wherein the frustoconical portion (14) of the inner wall (10) comprises an opening angle (α14) greater than or equal to the opening angle (α20) of the conical outer wall (20), preferably strictly greater than the opening angle (α20) of the conical outer wall (20).

4. Supersonic speed attenuator (2) according to one of claims 1 to 3, wherein the de-icing volume (V) comprises a cross-sectional area (S) substantially constant over at least 50% of its length, preferably over at least 75% of its length.

5. Supersonic speed attenuator (2) according to one of claims 1 to 4, wherein the de-icing volume (V) comprises a radial thickness (E) of less than 50mm, and preferably greater than 2mm.

6. Supersonic speed attenuator (2) according to one of claims 1 to 5, wherein the inner wall (10) of the de-icing device (1) comprises at its upstream end an opening (13) for fluidic communication between the supply member (11) and the de-icing volume (V).

7. Supersonic speed attenuator (2) according to one of claims 1 to 6, wherein the inner partition (22) comprises at least one opening (24) for fluidic communication of the discharge member (12) and the de-icing volume (V).

8. Supersonic speed attenuator (2) according to one of claims 1 to 7, wherein the cavity (23) comprises an axial length greater than 15cm.

9. Air intake (5) of an aircraft propulsion assembly (8), said aircraft propulsion assembly (8) extending longitudinally along an axis (X) oriented from upstream to downstream and comprising a turbomachine (7) configured to enable the propulsion of the aircraft at supersonic speeds from the acceleration of a subsonic air flow (F) circulating from upstream to downstream in the turbomachine (7), said air intake (5) comprising:
- a duct (4) of longitudinal axis (X) configured to guide the air flow (F) into the turbomachine (7),
- a supersonic speed attenuator (2) according to one of claims 1 to 8, extending fixed inside the duct (4) along the longitudinal axis (X), and
- at least one support arm (3) connecting the supersonic speed attenuator (2) to the duct (4).

10. Method for de-icing a supersonic speed attenuator (2) according to one of claims 1 to 8, said method comprising:
- a step of supplying (E1) the de-icing volume (V) with de-icing air flow (F_{D}) via the supply member (11),
- a step of circulating (E2) the de-icing air flow (F_{D}) in the de-icing volume (V), in order to heat the outer wall (20) by thermal exchanges, in order to de-ice it, and
- a step of discharging (E3) the de-icing air flow (F_{D}) in the discharge member (12) out of the de-icing volume (V).
